# EUROPEAN PATENT SPECIFICATION

(11) **EP 3 051 252 B1**
(45) Date of publication and mention of the grant of the patent: **09.05.2018**
(21) Application number: 14849875.1
(22) Date of filing: 01.09.2014
(51) Int. Cl.: G01B 11/245, G01B 11/25, B60M 1/28

(54) **TROLLEY WIRE MEASUREMENT DEVICE AND TROLLEY WIRE MEASUREMENT METHOD**
OBERLEITUNGSDRAHTMESSVORRICHTUNG UND OBERLEITUNGSDRAHTMESSVERFAHREN
DISPOSITIF ET PROCÉDÉ DE MESURE D'UN CÂBLE DE TROLLEY

(30) Priority: 27.09.2013 JP 2013201383
(43) Date of publication of application: 03.08.2016
(73) Proprietor: Hitachi High-Tech Fine Systems Corporation, Kodama-gun, Saitama 369-0395 (JP)
(72) Inventor: WATANABE Masahisa, Kodama-gun Saitama 369-0395 (JP)
(74) Representative: Addiss, John William
(86) International application number: PCT/JP2014/072879
(87) International publication number: WO 2015/045743

(56) References cited:
- EP-A2- 1 855 084
- EP-A2- 1 855 084
- DE-A1- 10 044 432
- DE-C1- 19 634 060
- JP-A- 2008 089 524
- JP-A- 2009 103 499
- JP-A- 2010 243 275

## Description

### TECHNICAL FIELD

The present invention relates to a trolley wire measurement apparatus and a trolley wire measuring method for measuring an amount of wear, etc. , of a trolley wire(s), being an electric power supply source for a car.

### PRIOR ART(S)

An electric car of an electric train, traveling on the rails for the electric cars, obtains the necessary electric power thereof from a trolley wire (s) through an upper surface of pantograph (i.e. , a contact strip). A lower surface of the trolley wire (i.e., a slide moving surface or a sliding surface) and the upper surface of the pantograph are worn out, gradually, due to sliding contact on each other. In order to avoid the wear from being concentrated to a part thereof on the side of the pantograph, the trolley wire is deviated towards to the left-hand direction and the right-hand direction, alternately, by each of electric supporting poles. An amount of wear and/or an amount of deviation of the trolley wire is/are examined, i.e., if being good or not (bad), by conducting a traveling measurement, periodically, with loading a trolley wire measurement apparatus on a measurement train (or an inspection car), etc.

As one of the trolley wire measurement apparatuses, there are already known a type, in which scanning is made on the trolley wire, covering over a range of the deviation thereof, with irradiating a laser beam upon that trolley wire, while rotating a rotary polygon mirror on a horizontal surface. In one of those, a test signal about the sliding surface of the trolley wire is obtained by receiving a reflection light, being reflected upon the sliding surface of the trolley wire and guided therefrom, which can be obtained depending on that scanning, on a light receiving element, via a mirror having a hole therein, and then calculation is made on width or period of generation of the test signals, which can be obtained depending on the scanning thereof, in a data processing apparatus; thereby, measuring the amount of wear of the trolley wire. A measurement train or an inspection car, loading such trolley wire wear amount measurement apparatuses, are already described in the following Patent Document 1, 3 or 4.

In the following Patent Document 2 is described a calculation of the amount of wear within the measurement apparatus of the trolley wire, in which the width of the sliding surface of the trolley wire is obtained through image processing of a picture, being sampled by means of a CCD camera, and from this, the amount of wear is measured out. Also, in the following Patent Documents 5 and 7 , there is also described that of obtaining a reflection signal from the sliding surface of the trolley wire, so as to obtain the width of the sliding surface of the trolley wire, in particular, from the waveform thereof; thereby calculating out the amount of wear from this.

Another trolley wire measurement apparatus is also described in the following Patent Document 6, in which a residual amount height and/or width is measured by obtaining a shadow of the trolley wire lying between a sensor light emitting portion and a light receiving portion, by means of a transmission-type sensor having the light emitting portion and the light receiving portion on side surfaces thereof putting a guide rail between them, while guiding the trolley wire onto that guide rail.

DE10044432 discloses automatic optical detection of the abrasion of the contact wires of overhead lines by optically imaging the contact wire in a line camera. The disclosed device is placed on a vehicle in a location which is different from that of the pantograph. Based on a rule, a correction occurs, whereby special correction measures are provided and applied in order to fine focus the imaging despite the varying heights of the contact wire.

EP1855084 discloses a method that involves determining a real breadth measuring value based on retaining of a flank and a grinding surface of a catenary wire in a selected tunnel section, where the wire is illuminated by a light source. A correction value is determined by comparison with the determined value and a breadth measuring value before calculating a remaining height. The measuring value that is determined from the retaining of the surface is corrected with the help of the correction value. Also disclosed is a device for determining the remaining height of a catenary wire.

DE19634060 discloses an arrangement that includes a lighting arrangement which illuminates an over-head wire, and at least one photoelectric sensor mounted on a vehicle, underneath the over-head wire. The lighting arrangement includes a first lighting device, arranged adjacent to the sensor, and a second lighting device arranged opposite the sensor. The sensor detects a light reflected by the over-head wire, and a light reflected by a slider mirror of the over-head wire, so that an image of the over-head wire and the slider mirror is produced on detector elements of the sensor.

### PRIOR ART DOCUMENT(S)

### PATENT DOCUMENTS

Patent Document 1: Japanese Patent Laying-Open No. 2001-59710 (2001);
Patent Document 2: Japanese Patent Laying-Open No. Hei 5-96980 (1993);
Patent Document 3: Japanese Patent Laying-Open No. Hei 5-34113 (1993);
Patent Document 4: Japanese Patent Laying-Open No. Hei 10-194015 (1998);
Patent Document 5: Japanese Patent Laying-Open No. Hei 07-120227 (1995);
Patent Document 6: Japanese Patent Laying-Open No. Hei 07-120228 (1995); and
Patent Document 7: Japanese Patent Laying-Open No. 2010-243274 (2010).

### DISCLOSURE OF THE INVENTION

### PROBLEM(S) TO BE DISSOLVED BY THE INVENTION

In such trolley wire measurement apparatus for measuring a worn-out residual amount of the trolley wire, by converting a residual diameter from the width of the sliding surface, as shown in the Patent Documents 1 to 7, a measurement of the width is made on the sliding surface of the trolleywire, by means of the reflection light upon the sliding surface of the trolley wire, while irradiating a laser beam or a light of sodium lamp or a light of LED upon the sliding surface of the trolley wire. For this reason, the measurement is influenced, largely, depending on the condition of the sliding surface of the trolley wire, and in particular, in case where no reflection light, reflecting up on the sliding surface of the trolley wire, turns back to the a measuring instrument, because of blackening or rust or inclination or biasing wear on the sliding surface of the trolley wire, there is a possibility of resulting to measure the width of the sliding surface of the trolley wire to be thin.

Also, in the apparatus having the structure of measuring the remaining diameter of the trolley wire, directly, through a shadow of the trolley wire, which can be obtained projection in a vertical direction, since a detector is guided in contact with the trolley wire, and since an increase of the train velocity kicks out the detector therefrom, therefore the measurement must be conducted under a condition of a low velocity, and it sometimes takes a time for replacing the guide, in particular, in an overlapping portion of the trolley wires.

The present invention is accomplished by taking those aspects mentioned above into the consideration thereof, and an object thereof is to provide a trolley wire measurement apparatus and a trolley wire measuring method for enabling measurement of configuration of the wore-out portion of the trolley wire from the traveling car, easily.

### MEANS FOR DISSOLVING THE PROBLEM(S)

According to a first aspect of the present invention there is provided a trolley wire measurement apparatus for a car according to claim 1.

According to a second aspect of the present invention there is provided a trolley wire measuring method according to claim 5.

### EFFECT(S) OF THE INVENTION

According to the present invention, there can be obtained an effect of enabling the measurement of the configuration of the wore-out portionof the trolley wire from the traveling car, easily.

### BRIEF DESCRIPTION OF THE DRAWINGS

Fig. 1 is a view for explaining a measuring principle of a trolley wire measurement apparatus according to the present invention;
Fig. 2 is a view for showing a relationship, conceptually, of a direction of a light receiving view field of a trolley wire measuring instrument with respect to the trolley wire;
Fig. 3 is a view for showing examples of measuring waveforms corresponding to cutoff of a light by the trolley wire to be measured by the trolley wire measurement apparatus;
Fig. 4 is a cross-section view for showing an example of a trolley wire inspection car loading the trolley wire measurement apparatus shown in Fig. 1 thereon;
Fig. 5 is a block diagram for showing an entire structure of the trolley wire measurement apparatus shown in Fig. 1; and
Fig. 6 is a flowchart for showing an example of processes which are executed within the trolley wire measurement apparatus, according to the present embodiment.

### MODE FOR CARRYING OUT THE INVENTION

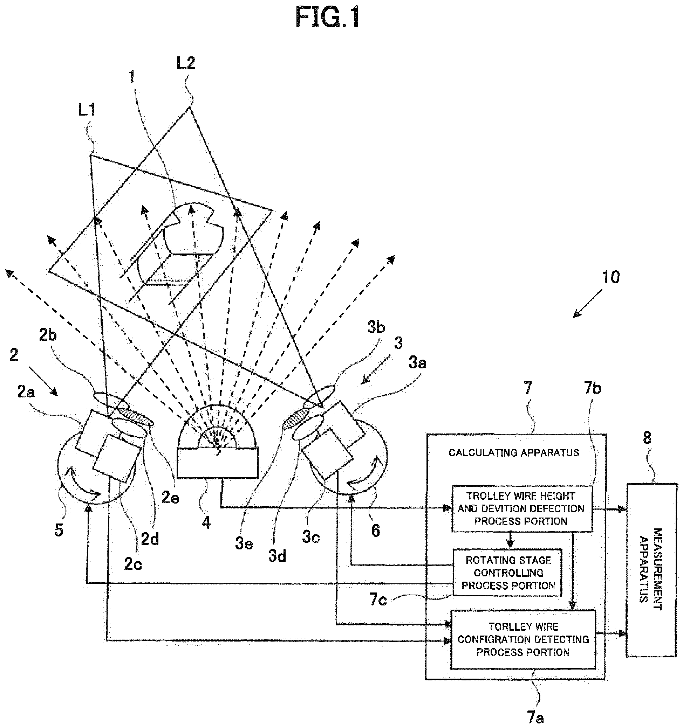

Hereinafter, explanation will be given on a trolley wire measurement apparatus and a trolley wire measuring method, according to the present invention, upon basis of the drawings attached herewith. Fig. 1 is a view for explaining a measuring principle of the trolley wire measurement apparatus according to the present invention. The trolley wire measurement apparatus 10 includes, in the structure thereof, a trolley wire measuring instrument 2, which is provided on the left-hand side of a car, a trolley wire measuring instrument 3, which is provided on the right-hand side thereof, a trolley wire height and deviation detector 4, which is provided in vicinity of the center of the car, a rotating stage 5 for holding the trolley wire measuring instrument 2 thereon, a rotating stage 6 for holding the trolley wire measuring instrument 3 thereon, a calculating apparatus 7 for executing various kinds of calculations therein, and a measurement apparatus 8.

Each the trolley wire measuring instrument 2 or 3, having the structure same to each other, includes a light emitting (or projection) unit 2a or 3a, and a light receiving unit 2c or 3c, in the structure thereof. The light emitting unit 2a or 3a converts a monochromatic light having a specific wavelength within a range of infrared light into a strip slit light by the function of a light emitting lens 2b or 3b; thereby to irradiating it upon a trolley wire 1. The light receiving unit 2c or 3c receives a reflection guided from the trolley wire 1, through an image forming lens 2d or 3d, after removing disturbance lights therefrom by means of a coherent filter 2e or 3e. A light emission (or projection) area L1 or L2, each having a triangle shape in the figure, shows an area or region where the emission light by the light emitting unit 2a or 3a can irradiate thereupon. The wavelength of the monochromatic light by means of the light emitting lens 2b or 3b is determined, for example, λ=780nm. The light receiving unit 2c or 3c is construed by a 3D camera, having a light receiving element made of a CMOS sensor in an inside thereof. A light receiving signal detected on the light receiving unit 2c or 3c is outputted to a trolley wire configuration detecting process portion 7a of the calculating apparatus 7. The trolley wire configuration detecting process portion 7a of the calculating apparatus 7 shapes up a height profile of an outline or contour of the trolley wire, through the reflection light of the laser slit light, upon basis of a laser triangle principle, and it outputs a result of the measurement to the measurement apparatus 8.

The trolley wire height and deviation detector 4, being constructed by a laser measuring sensor, is provided on a roof of the car. The trolleywire height and deviation detector 4 receives the reflection light from the trolley wire 1 above the roof of the car while scanning the laser light in the direction of deviation of the trolley wire 1, and thereby measuring a distance and an angle defined between the laser measuring sensor and the trolley wire 1. The trolley wire configuration detecting process portion of the calculating apparatus 7 calculates out coordinates of the height and deviation thereof, upon basis of the setout position of the trolley wire measuring instrument 2 or 3 on the roof. The rotating stage 5 or 6 is provided for rotating the trolley wire measuring instrument 2 or 3 within a plane approximately vertical to the direction of progress or traveling of the car, so that the trolley wire 1 falls within a field of view of photographing by means of the trolley wire measuring instrument 2 or 3. The trolley wire measuring instrument 2 or 3 is attached on a rotating portion of this rotating stage 5 or 6.

The rotating stage 5 or 6 is provided on the roof in such a manner that it can rotates the field of view of the photographing by the trolley wire measuring instrument 2 or 3, in accordance with direction of the deviation of the trolley wire. A rotating stage controlling process portion 7c of the calculating apparatus 7 controls the f ieldof viewof the trolley wire measuring instrument 2 or 3, so that it can follow the position of the trolley wire, by controlling rotation of the rotating portion of the rotating stage 5 or 6, upon basis of the coordinates of height and deviation of the trolley wire, which is measured by the trolley wire height and deviation detector 4. The trolley wire conf iguration detecting process portion 7a controls the field of view of the trolley wire measuring instrument 2 or 3, so that it follows the position of the trolley wire, by controlling the rotating portion of the rotating stage 5 or 6, upon basis of the coordinates of height and deviation of the trolley wire, which are measured by the trolley wire height and deviation detector 4.

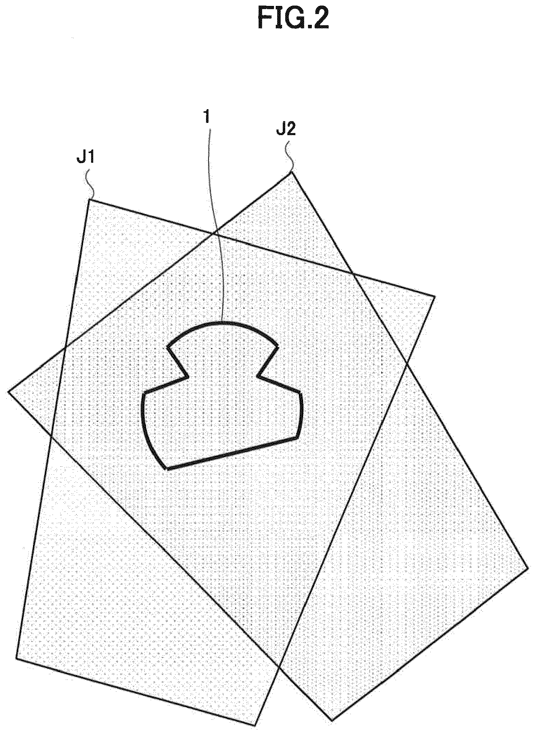

Fig. 2 is a view for showing a relationship, conceptually, of a direction of a light receiving view field of a trolley wire measuring instrument with respect to the trolley wire. A light emission area L1 triangle-shaped shown in Fig. 1 corresponds to a field of view "J1" of the trolley wire measuring instrument 2 on the left-hand side, while a light emission area L2 corresponds to a field of view "J2" of the trolley wire measuring instrument 3 on the right-hand side.

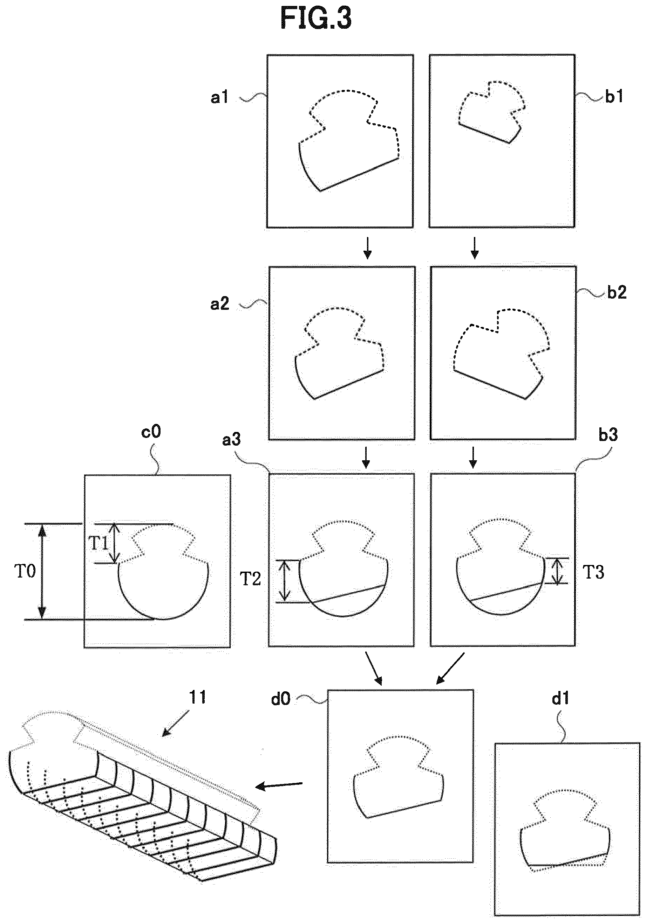

Fig. 3 is a view for showing examples of measuring waveforms corresponding to cutoff of a light by the trolley wire to be measured by the trolley wire measurement apparatus. In case where the trolley wire 1 lies in such position as shown in Fig. 2 within the field of view of the trolley wire measuring instrument 2 or 3, a height prof ile of the outline (oracontour) of the trolleywire is produced, upon basis of the light receiving signals supplied from the 3D camera within the light receiving unit 2c or 3c. When the trolley wire 1 lies near the trolley wire measuring instrument 2 on the left-hand side, but is at the position farther than the trolley wire measuring instrument 3 on the right-hand side, as is shown inFig. 2, then a detectionprof ile "a1" of the trolley wire measuring instrument 2 on the left-hand side comes to be larger than a detection profile "b2" of the trolley wire measuring instrument 3 on the right-hand side. The detection profile "a1" of the trolley wire measuring instrument 2 on the left-hand side comes to be equal to, in the sizes thereof, the detectionprofile "b2" of the trolley wire measuring instrument 3 on the right-hand side, when the trolley wire 1 is positioned at an equal distance, approximately, with respect to both the trolley wire measuring instrument 2 on the left-hand side and the trolley wire measuring instrument 3 on the right-hand side.

As is shown in Fig. 2, in cases where the distance of the trolley wire measuring instrument 2 on the left-hand side differs from that of the trolley wire measuring instrument 3 on the right-hand side, with respect to the trolley wire 1, then the distances of the trolley wire measuring instrument 2 on the left-hand side and of the trolley wire measuring instrument 3 on the right-hand side to the trolley wire 1 are calculated out, depending on a result of detection by the trolley wire height and deviation detector 4, and an adjustment or correction is conducted thereon, in accordance with a magnification factor of an angle of field, by determining a reference of distance, arbitrarily; i.e. , processing the detection profiles to be equal to each other in the sizes thereof. With doing this, the detection profiles "a1" and "b1" are adjusted to be equal to each other, on the left-hand side and the right-hand side, as shown by correction profiles "a2" and "b2" in the figure. However, on the detection profiles "a1" and "b1" and the correction prof iles "a2" and "b2" are drawn dotted lines, as imaginary outlook lines, so that an outer shape of the trolley wire 1 can be seen easily; however, an actual detection profile is constructed or defined by only solid line.

A reference profile "cO" depicts a cross-section shape of the trolley wire 1 before it is worn out, i.e. , a new wire. This reference profile "cO" corresponds to the size in case where the distances of the trolley wire measuring instrument 2 on the left-hand side and of the trolley wire measuring instrument 3 on the right-hand side are equal to, approximately, with respect to the trolley wire 1. Accordingly, the correction profiles "a2" and "b2" are corrected into the size nearly equal to this reference profile "cO" in the sizes thereof (i.e., an equal magnifying factor).

A matching process with the reference profile "cO", i.e., a basic pattern, is conducted, by rotating the correction profiles "a2" and "b2" , which are corrected to the equal magnifying factor. On the trolley wire 1 are formed grooves, which are put between ears, but not shown in the figure, as can be seen from the cross-section configuration thereof, on upper both ends of the trolley wire 1. Namely, an outer configuration of the new wire of the trolley wire 1 has a shape of combining a short arc on an upper side and a long arc on a lower side, which are cut out by the wedge-shaped grooves on the upper both ends on a circle, with two (2) pieces of wedge-shapes. On the reference profile "cO", height of an upper portion of the trolley wire 1 comes to "T1", and a residual amount of the trolley wire 1 through wearing thereof (hereinafter, being called "a worn-out residual amount") comes to the diameter of the trolley wire 1, i.e., "T0".

In this matching process is conducted such a process that the end portions of the long arc, corresponding to the height "T1" of this reference profile "cO", are consistent with, respectively. For example, a pattern matching process between both is executed by rotating the correction profile "a2" into the clockwise direction, so that the upper end portion of the arc on the left-hand side of the correction profile "a2" comes to be consistent with the left-hand side upper end portion of the long arc of the reference profile "cO", respectively. Also, the pattern matching process is executed, by rotating the correction profile "b2" into the anti-clockwise direction, so that the upper end portion of the arc on the right-hand side of the correction profiles "b2" comes to be consistent with the right-hand side upper end portion of the long arc of the reference profile "cO", respectively.

A matching profile "a3" shows a result of the pattern matching process between the correction profile "a2" and the reference profile "cO", and a matching profile "b3" shows a result of the pattern matching process between the correction profile "b2" and the reference profile "cO". As a result of those pattern matching processes, it is possible to detect the height "T2" of a residual side surface of the trolley wire 1 on the left side thereof, upon basis of the matching profile "a3", and also to calculate the height "T3" of a residual side surface of the trolley wire 1 on the right side thereof, upon basis of the matching profile "b3". A value obtained by adding an averaged value between the residual side surface height "T2" on the left-hand side and the residual side surface height "T3" on the right-hand side, which are calculated respectively, to the upper portion height "T1" of the trolley wire 1, comes to the worn-out residual amount of the trolley wire 1.

A cross-section profile "d0" of the lower portion of the trolley wire 1 can be obtained by composing the matching profiles "a3" and "b3", each being removed the reference profile "cO" therefrom. By aligning the cross-section profiles "d0", which can be obtained in this manner, in the time sequences thereof, it is possible to display the configuration of the sliding portion of the trolley wire 1 in the form of a solid or cubic (3D) picture 11. The cross-section profile "d1" shows an example of the case of generating two (2) surfaces on the sliding surface of the trolley wire because of the wearing of the sliding surface of the trolley wire 1 on one side thereof. Even in the case of generating two surfaces on the sliding surface of the trolley wire, in this manner, since it is possible to measure the cross-section configuration of the trolley wire, including the sliding surface of that trolley wire, therefore it is also possible to measure the amount of wear of the trolley wire worn out on one side thereof.

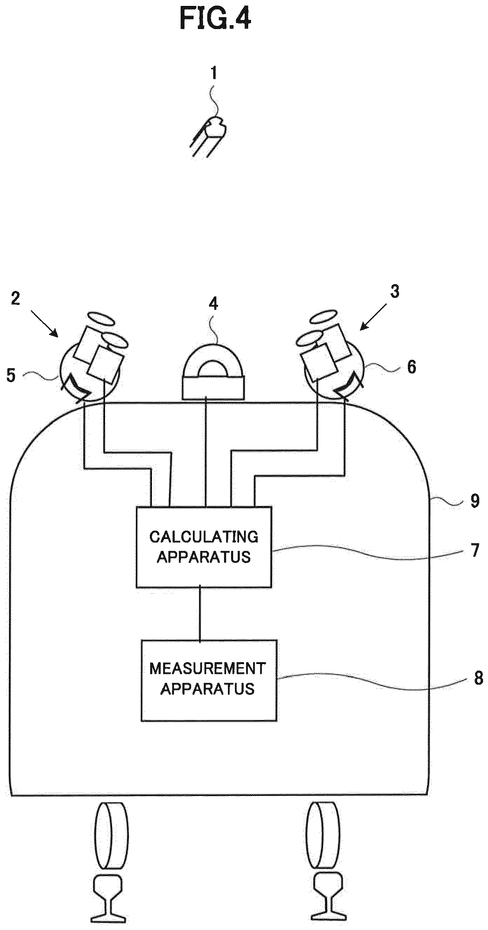

Fig. 4 is a cross-section view for showing an example of a trolley wire inspection car, loading such trolley wire measurement apparatus as shown in Fig. 1 thereon. In this Fig. 4, the trolley wire height and deviation detector 4 is provided at around the center between the left-hand side and the right-hand side of the car, on a roof of a trolley wire inspection car 9. The trolley measuring instruments 2 and 3 and the rotating stages 5 and 6 are provided at a position of looking up the trolley wire 1 in an above sky at a relative angle, i.e. , at the positions of the left-hand side and the right-hand side of the trolley wire inspection car 9 on the roof thereof, but separating from the center thereof. For example, preferably, they are provided at the positions separating by 400 mm or more than that, approximately, from the center between the left-hand side and the right-hand side of the car. Within the trolley wire inspection car 9 is provided the calculating apparatus 7 and the measurement apparatus. The calculating apparatus 7 controls the trolley wire measuring instruments 2 and 3 and the rotating stages 5 and 6, as well as, calculating the detector signals from those trolley wire measuring instruments 2 and 3. The measurement apparatus 8 conducts operations and data recording.

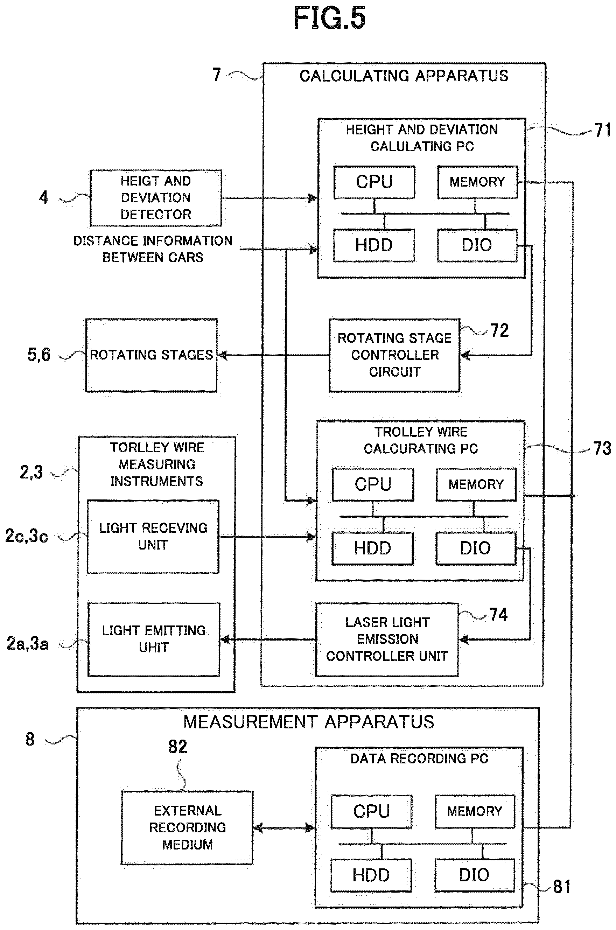

Fig. 5 is a block diagram for showing an entire structure of the trolley wire measurement apparatus shown in Fig. 1. The calculating apparatus 7 is constructed, including a height and deviation calculating personal computer 71, a rotating stage controller circuit 72, a trolley wire calculatingpersonal computer 73 and a laser emission (or projection) controller circuit 74 therein. The height and deviation calculating personal computer 71 is made up with a personal computer, in which a CPU (Central Processing Unit), a memory and a HDD (Hard Disk Device), and a DIO (disk input-output interface disk input-output interface) are connected with, through a bus, respectively. The height and deviation calculating personal computer 71 conducts conversion into a X-coordinate, i.e., the height from the trolley wire measuring instruments 2 and 3 , a Y-coordinate, i.e., the deviation, by means of a height/deviation coordinates conversion program, which is taken from the HDD, and upon basis of that, it calculates out the moving angular volumes for the rotating stages 5 and 6. The height and deviation calculating personal computer 71 stores the moving angular volumes, being parameterized, into the memory, and assigns them to the coordinates, and outputs a moving signal to the rotating stage controller circuit 72 via the DIO. The rotating stage controller circuit 72 outputs angular moving signals to the rotating stages 5 and 6, in accordance with the moving signal supplied from the rotating stage controller circuit 72. Those rotating stages 5 and 6 move the angles thereof so that the trolley wire 1 falls within both the view fields of the trolleywiremeasuring instruments 2 and 3, respectively, in accordance with the angular moving signals supplied from the rotating stage controller circuit 72. To the height and deviation calculating personal computer 71 is inputted car distance information, so as to obtain synchronization with a car moving position.

The trolley wire calculating personal computer 73 is built up with a personal computer, in which the CPU, the memory, the HDD and the DIO are connected with, respectively, via the bus. The trolley wire calculating personal computer 73 outputs ON/OFF control signals for controlling the light emission of laser light, from the laser emission controller circuit 74 to the light emitting (or projection) units 2a and 3a. Each of those light emitting units 2a and 3a converts the monochromatic light into the strip slit light by means of the light emission lens 2b or 3b, and thereby irradiates it upon the trolley wire 1. The trolley wire calculating personal computer 73 takes the profile signals, which are outputted from the 3D cameras, i.e., the light receiving units 2c and 3c of the trolley wire measuring instruments 2 and 3 , into an internal memory thereof. The trolley wire calculating personal computer 73 produces a profile picture of light cutoff, while treating a binary coding process, a noise removal process and a smoothing process upon the profile signals taken therein, by means of he programs stored within the HDD, and then stores them into an internal memory thereof, temporally. The trolley wire calculating personal computer 73 conducts the process shown in Fig. 3 upon the profiles stored therein, and produces a trolley wire wear amount and a 3D picture, thereby to output them to the measurement apparatus 8. Also, to the trolley wire calculating personal computer 73 is inputted the car distance information, therefore synchronization with the car moving position can be obtained, and further is added car moving position information to the measurement data.

The measurement apparatus 8 is made up with, including a data recording personal computer 81 and an external memory medium 82 therein. The data recording personal computer 81 is made by a personal computer, in which the CPU, the memory, the HDD and the DIO are connected with, respectively, through the bus. The data recording personal computer 81, the trolley wire calculating personal computer 73 and the height and deviation calculating personal computer 71 of the calculating apparatus 7 are connected with one another through a LAN. The measurement apparatus 8 receives the measurement data from the calculating apparatus 7, and records the data into the external memory medium 82.

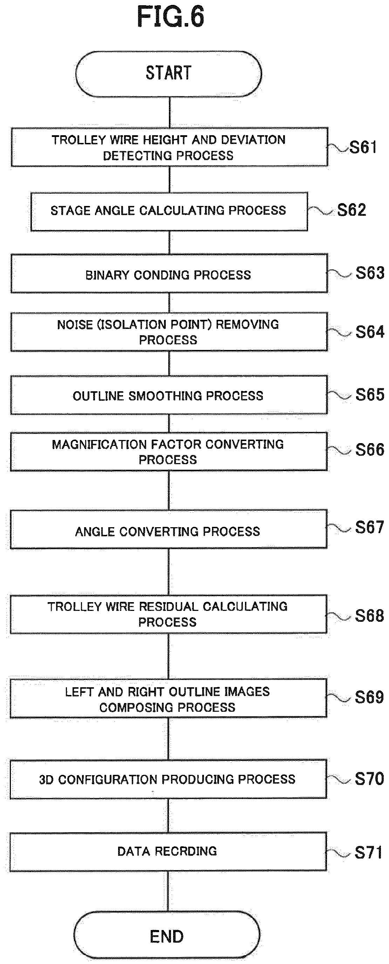

Fig. 6 is a flowchart for showing an example of processes for execution of the trolley wire measurement apparatus, according to the present embodiment. In a step S61 of a trolley wire height and deviation detecting process, the height and deviation calculating personal computer 71 shown in Fig. 5 converts the height of the trolley wire 1 into the X-coordinate and the deviation into the Y-coordinate, upon basis of the signals from the height and deviation detector 4 of the trolley wire 1. In a step S62 of a stage angle calculating process, the height and deviation calculating personal computer 71 shown in Fig. 5, as is shown in Fig. 4, calculates out the moving angles of the rotating stages 5 and 6, from the setup positions thereof on the roof in directions towards to the trolley wire 1, and outputs them. In a step S63 of the binary coding process , the trolley wire calculating personal computer 73 shown in Fig. 5 produces a binary coded image by converting the signals from the 3D cameras, being the light receiving units 2c and 3c in Fig. 1, into binary coded signals. In a step S64 of noise (an isolation point) removing process, the wire calculating personal computer 73 shown in Fig. 5 executes the noise removing process upon the binary coded signals, and thereby removing the isolation point (s) from the binary coded image. In a step S65 of smoothing process, a process for smoothing a profile line of the light cutoff of the trolley wire 1.

In a step S66 of a magnification factor converting process, the trolley wire calculating personal computer 73 shown in Fig. 5 determines the reference distances between the trolley wire 1 and the trolley wire measuring instruments 2 and 3 , from the distance data between the trolley wire 1 and the trolley wire measuring instruments 2 and 3 , which are calculated in the height and deviation calculating personal computer 71 shown in Fig. 5, and executes a magnification factor converting process upon the detection profiles by a magnification factor between the measurement distances; thereby producing a correction profile. In a step S67 of an angle converting process, the trolley wire calculating personal computer 73 shown in Fig. 5 executes the matching process, by rotating the correction profiles after conversion of the magnification factors thereof, fitting to trolley wire cross-section configuration profile reference patterns (e. g. , the reference profile "c0" in Fig. 3), respectively. In a step S68 of a trolley wire residual diameter calculating process, the trolley wire calculating personal computer 73 shown in Fig. 5 extracts a trolley wire side surface of the profile of the trolley wire 1 measured, through a pattern matching, and calculates the heights of the trolley wire surfaces (on the left-hand side and the right-hand side), and thereafter, it calculates a trolley wire residual diameter, by adding a value, which is obtained by dividing a summation of those heights "T2" and "T3" on the left-hand side and the right-hand side by two (2), to the height "T1" of an upper portion of the trolley wire of the reference profile "c0" shown in Fig. 3. In this instance, in particular, if a profile line corresponding to the sliding surface of the trolley wire cross-section surface, as is shown by "d1" in Fig. 3, is not a straight line, since it is impossible to obtain a correct trolley wire residual diameter through the above-mentioned calculation of the height of the side surface of the trolley wire, then the residual diameter of the trolley wire is obtained through a configuration measuring process, including the sliding surface of the trolley wire therein.

In a step S69 of an image composing process of the left-hand side outline and the right-hand side outline, the trolley wire calculating personal computer 73 shown in Fig. 5 executes a composing process upon the process data of the trolley wire measuring instruments 2 and 3 ; i. e. , between the matching profiles themselves; thereby producing trolley wire lower portion cross-section data. In a step S70 of a 3D configuration producing process, a cubic (3D) image of the trolley wire is produced by aligning the trolley wire lower portion cross-section data, which are obtained in the previous step S69 , in the time sequences thereof. In a process S71 of a data recording, the data recording personal computer 81 of the measurement apparatus 8 conducts a process of recording into the external recording medium, after adding the car position information to the trolley wire height and deviation data from the height and deviation calculating personal computer 71, as well as, the data of the trolley wire worn-out residual diameter and the cubic (3D) image data of the trolley wire from the trolley wire calculating personal computer 73.

In the embodiment mentioned above, the laser beam of the monochromatic light in the infrared region is applied; however it should not be limited to that within the infrared region, if it is the monochromatic light, but as far as it can generate the reflection light upon the trolley wire, stronger than the sunlight during the daytime in the intensity thereof. Also, in the embodiment mentioned above, the laser slit light is emitted from and received on the 3D cameras; however, the light emitting unit(s) and the light receiving unit (s) according to the present invention should not be limited to the laser beam and the 3D cameras, and they may be constructed with a two (2) -dimensional displacement sensor, in general, applying the laser or LED or the like therein. Further, in the embodiments mentioned above, although they achieve such following function, as mentioned above, by means of the rotating stages 5 and 6 , so as to maintain a range of movement in the deviation and the height of the trolley wire; however, those trolley wire measuring instruments 2 and 3 may be provided, fixedly, with omitting the rotating stages 5 and 6 therefrom, as far as the sensor can have a sufficient dissolving power, and the field of view of the sensor can keep the ranges of the height and the deviation.

In the embodiment mentioned above, the coordinates of the height and the deviation from the trolley wire measuring instruments 2 and 3 are detected with applying the height and deviation detector 4, and thereby calculating the moving angles of the rotating stages upon basis of those; however, the moving angles of the rotating stages 5 and 6 may be controlled by a method other than this. For example, the moving angles of the rotating stages 5 and 6 may be so controlled that the gravity centers of the detection profiles "a1" and "b1" come to be nearly constant within a picture or a screen by conducing image processing upon those detection profiles "a1" and "b1". Also, since the sliding surface is common with, the correction profiles "a2" and "b2" may be produced, by conducting such image processing thereupon that those sliding surfaces come to be coincident with each other in the sizes thereof.

In the embodiment, the following function is achieved by applying the rotating stages 5 and 6 therein; however, in the place thereof, there may be provided such a slide plate, for fixedly providing the trolley wire measuring instruments 2 and 3 thereon, at the positions enabling to photograph the trolley wire from the left-hand side and the right-hand-side, including the lower side (i.e., the sliding surface) of the trolley wire, so that it allows the trolley wire measuring instruments 2 and 3, being provided fixedly, to move with sliding on the roof of the car, along the deviating direction of the trolley wire. In this case, a control of the slide plate may be made, in such a manner that, both of those detection profiles "a1" and "b1" come to be nearly equal to, in the sizes thereof after conducting the image processing thereon.

### EXPLANATIONS OF MARKS

- a1, b1: detection profile
- a2, b2: correction profile
- a3, b3: matching profile
- c0: reference profile
- d0, d1: cross-section profile
- 1: trolley wire
- J1, J2: light receiving view field
- L1, L2: light emission area
- 10: trolley wire measurement apparatus
- 11: cubic image
- 2, 3: trolley wire measuring instrument
- 2a, 3a: light emitting unit
- 2b, 3b: light emitting lens
- 2c, 3c: light receiving unit
- 2d, 3d: image forming lens
- 2e 3e: coherent filter
- 4: trolley wire height and deviation detector
- 5, 6: rotating stage
- 7: calculating apparatus
- 71: height and deviation calculating personal computer
- 72: rotating stage controller circuit
- 74: trolley wire calculating personal computer
- 75: measurement apparatus
- 81: data recording personal computer
- 82: external recording medium
- 9: trolley wire inspection car

## Claims

1. A trolley wire measurement apparatus for a car (9), comprising:
a first and a second trolley wire measuring means (2, 3), both of which are configured to be provided on a roof of a car (9), and to project slit laser beams (L1, L2), approximately in a vertical direction, upon a trolley wire (1) from a lower left-hand side and a lower right-hand side thereof, so as to be irradiated on said trolley wire (1); thereby obtaining images (a1, b1), presenting configurations of said trolley wire (1) on the lower left-hand side and the lower right-hand side thereof, including a side surface thereof, each being obtained from an image (a1, b1) of the reflection light of said projected laser beams (L1, L2), respectively;
wherein each of said first and said second trolley wire measuring means (2, 3) is constructed with a light projecting means (2a, 3a) for projecting said laser beam (L1, L2) upon said trolley wire (1), approximately in the vertical direction, and a light receiving means (2c, 3c) for photographing said image (a1, b1) with a predetermined elevation angle directing to the progress of said car (9); and
wherein the trolley wire measurement apparatus further comprises:
a laser length measuring sensor means, which is configured to be provided in the vicinity of a center of the roof of said car (9), and to scan a laser beam into a direction of deviation of said trolley wire (1);
a height and deviation detecting means (4), which is configured to detect height and deviation coordinates of said trolley wire (1) on the basis of signals from said laser length measuring sensor means; and
a controller means (7), which is configured to calculate distances of the first trolley wire measuring means (2) on the left-hand side and of the second trolley wire measuring means (3) on the right-hand side to the trolley wire (1), based on a result of the detection by the trolley wire height and deviation detecting means (4),
wherein the controller means (7) is configured to process the images (a1, b1) presenting the configurations of said trolley wire (1) on the lower left-hand side and the lower right-hand side of said trolley wire (1), including the side surface thereof, which are obtained by said first and said second trolley wire measuring means (2, 3), wherein the processing comprises adjusting the images (a1, b1), based on the calculated distances, so that the sizes of the images (a1, b1) become equal to each other, thereby producing data indicative of a cross-section configuration of said trolley wire (1) on the sliding surface and the left-hand side and the right-hand side thereof.

2. The trolley wire measurement apparatus, as described in Claim 1, further comprising:
a measuring means (8), which is configured to calculate an amount of wear of said trolley wire (1) on the basis of data indicative of the cross-section configuration of said trolley wire (1) on the sliding surface and on the lower left-hand side and the lower right-hand side thereof, and to also calculate data indicative of a cubic configuration of said trolley wire (1).

3. The trolley wire measurement apparatus, as described in Claim 1 or 2, further comprising:
rotating stage means (5, 6), configured to be provided on both ends of the left-hand side and the right-hand side of said car (9), for controlling rotations of said first and said second trolley wire measuring means (2, 3) while holding them thereon, so that ranges of fields of views of photographing of said first and said second trolley wire measuring means (2, 3) can rotate within surfaces, each being approximately perpendicular to a direction of progress of said car (9); and
a rotation controller means (7c), which is configured to control the rotations of said rotating stage means (5, 6), so that said trolley wire (1) enters within the ranges of fields of views of the photographing by said first and said second trolley wire measuring means (2, 3), on the basis of height and deviation coordinates of said trolley wire (1), changing in accordance with the progress of said car (9).

4. The trolley wire measurement apparatus, as described in Claim 1, 2, or 3, wherein
each of said first and said second trolley wire measuring means (2, 3) is configured to project monochromatic light in the infrared region, for generating the reflection light, being stronger than sunlight during daytime in an intensity thereof, as said laser beam (L1, L2), and to receive the lights so as to form the image (a1, b1) of said trolley wire (1) on a light receiving surface through a lens (2d, 3d).

5. A trolley wire measuring method comprising the following steps of:
projecting slit laser beams (L1, L2), approximately in a vertical direction, on a trolley wire (1) from a lower left-hand side and a lower right-hand side of said trolley wire (1), so as to be irradiated on said trolley wire (1);
obtaining images (a1, b1), presenting configurations of said trolley wire (1) on the lower left-hand side and the lower right-hand side thereof, respectively, including a side surface thereof, using a first and a second trolley wire measuring means (2, 3), which are provided on a roof of a car (9), on the basis of an image (a1, b1) obtained from a reflection light of said projected laser beams (L1, L2);
wherein each of said first and said second trolley wire measuring means (2, 3) is constructed with a light projecting means (2a, 3a) for projecting said laser beam (L1, L2) upon said trolley wire (1), approximately in the vertical direction, and a light receiving means (2c, 3c) for photographing said image (a1, b1) with a predetermined elevation angle directing to the progress of said car (9);
wherein the trolley wire measuring method further comprises:
scanning a laser beam into a direction of deviation of said trolley wire (1), using a laser length measuring sensor means, which is provided in the vicinity of a center of the roof of said car (9);
detecting height and deviation coordinates of said trolley wire (1) on the basis of signals from said laser length measuring sensor means;
calculating distances of the first trolley wire measuring means (2) on the left-hand side and of the second trolley wire measuring means (3) on the right-hand side to the trolley wire (1), based on a result of the detection, and
processing the images (a1, b1) presenting the configurations of said trolley wire (1) on the lower left-hand side and the lower right-hand side thereof, including the side surface thereof, which are obtained by said first and said second trolley wire measuring means (2, 3), wherein the processing comprises adjusting the images (a1, b1), based on the calculated distances, so that the sizes of the images (a1, b1) become equal to each other, and thereby producing data indicative of a cross-section configuration of said trolley wire (1) on a sliding surface and the left-hand side and the right-hand side thereof.

6. The trolley wire measuring method, as described in Claim 5, further comprising:
calculating an amount of wear of said trolley wire (1) on the basis of data indicative of the cross-section configuration of said trolley wire (1) on the sliding surface thereof and on the lower left-hand side and the lower right-hand side thereof, and also calculating data indicative of a cubic configuration of said trolley wire (1).

7. The trolley wire measuring method, as described in Claim 5 or 6, further comprising:
controlling rotations of said first and said second trolley wire measuring means (2, 3) while holding them thereon, so that ranges of fields of views of photographing by said first and said second trolley wire measuring means (2, 3) can rotate within surfaces, each being approximately perpendicular to a direction of progress of said car (9), with applying rotating stage means (5, 6), which are provided on both ends of the left-hand side and the right-hand side of said car (9); and
controlling the rotations of said rotating stage means (5, 6), so that said trolley wire (1) enters within the ranges of fields of views of the photographing by said first and said second trolley wire measuring means (2, 3), upon basis of height and deviation coordinates of said trolley wire (1), changing in accordance with the progress of said car (9).

8. The trolley wire measuring method, as described in Claim 5, 6, or 7, wherein
each of said first and said second trolley wire measuring means (2, 3) projects monochromatic light in the infrared region, for generating the reflection light, being stronger than sunlight during daytime in an intensity thereof, as said laser beam (L1, L2), and receives the lights so as to form the image (a1, b1) of said trolley wire (1) on a light receiving surface through a lens (2d, 3d).

## Patentansprüche

1. Oberleitungsmessvorrichtung für ein Fahrzeug (9), die Folgendes umfasst:
ein erstes und ein zweites Oberleitungsmessmittel (2, 3), von denen beide zur Bereitstellung auf dem Dach eines Fahrzeugs (9) und zur Projektion von Schlitzlaserstrahlen (L1, L2) konfiguriert sind, etwa in einer vertikale Richtung auf eine Oberleitung (1) von einer unteren linken Seite und einer unteren rechten Seite davon, sodass sie auf die Oberleitung (1) gestrahlt werden; wodurch Bilder (a1, b1) erhalten werden, die Konfigurationen der Oberleitung (1) auf der unteren linken Seite und der unteren rechten Seite davon darstellen, einschließlich einer seitlichen Fläche davon, wobei jedes jeweils von einem Bild (a1, b1) des reflektierten Lichts der projizierten Laserstrahlen (L1, L2) erhalten wird;
wobei jedes des ersten und des zweiten Oberleitungsmessmittels (2, 3) mit einem lichtprojizierenden Instrument (2a, 3a) konstruiert ist, um den Laserstrahl (L1, L2) auf die Oberleitung (1) etwa in einer vertikalen Richtung zu projizieren und mit einem lichtempfangenden Instrument (2c, 3c), um das Bild (a1, b1) mit einem vorher festgelegten Höhenwinkel in Fortbewegungsrichtung des Fahrzeugs (9) zu fotografieren; und
wobei die Oberleitungsmessvorrichtung ferner Folgendes umfasst:
ein Laser-Längenmess-Sensormittel, das zur Bereitstellung in der Nähe der Dachmitte des Fahrzeugs (9) und zur Abtastung eines Laserstrahls in einer Abweichungsrichtung der Oberleitung (1) konfiguriert ist;
ein Höhen- und Abweichungsdetektionsmittel (4), das zur Detektion von Höhen- und Abweichungskoordinaten der Oberleitung (1) auf Basis von Signalen von dem Laser-Längenmess-Sensormittel konfiguriert ist; und
ein Steuerungsmittel (7), das zur Berechnung von Abständen des ersten Oberleitungsmessmittels (2) auf der linken Seite und des zweiten Oberleitungsmessmittels (3) auf der rechten Seite zur Oberleitung (1) zu, basierend auf einem Detektionsergebnis des Oberleitungs-Höhen- und Abweichungsdetektionsmittels konfiguriert ist (4),
wobei das Steuerungsmittel (7) zur Verarbeitung der Bilder (a1, b1) konfiguriert ist, die die Konfigurationen der Oberleitung (1) an der unteren linken Seite und der unteren rechten Seite der Oberleitung (1), einschließlich der seitlichen Fläche davon darstellen, die von dem ersten und dem zweiten Oberleitungsmessmittel (2, 3) erhalten wurden, wobei die Verarbeitung die Anpassung der Bilder (a1, b1), basierend auf den berechneten Abständen, beinhaltet, sodass die Größen der Bilder (a1, b1) gleich groß werden, wodurch Daten erzeugt werden, die eine Querschnittskonfiguration der Oberleitung (1) an der Gleitfläche und der linken und der rechten Seite davon anzeigen.

2. Oberleitungsmessvorrichtung nach Anspruch 1, die ferner Folgendes umfasst:
ein Messmittel (8), das zur Berechnung eines Ausmaßes an Verschleiß der Oberleitung (1), auf Basis von Daten, die die Querschnittskonfiguration der Oberleitung (1) auf der Gleitfläche und der unteren linken Seite und der unteren rechten Seite davon anzeigen und außerdem zur Berechnung von Daten, die eine kubische Konfiguration der Oberleitung (1) anzeigen, konfiguriert ist.

3. Oberleitungsmessvorrichtung nach Anspruch 1 oder 2, die ferner Folgendes umfasst:
rotierende Trägermittel (5, 6), die zur Bereitstellung an beiden Enden der linken und der rechten Seite des Fahrzeugs (9), zur Steuerung von Rotationen des ersten und des zweiten Oberleitungsmessmittels (2, 3) konfiguriert sind, während diese darauf fixiert bleiben, sodass die Fotosichtfeldbereiche des ersten und des zweiten Oberleitungsmessmittels (2, 3) innerhalb von Flächen rotieren können, wobei sich jedes etwa senkrecht zu einer Fortbewegungsrichtung des Fahrzeugs befindet (9); und
ein Rotationssteuerungsmittel (7c), das zur Steuerung der Rotationen der rotierenden Trägermittel (5, 6) konfiguriert ist, sodass die Oberleitung (1) in die Fotosichtfeldbereiche des ersten und des zweiten Oberleitungsmessmittels (2, 3) gelangt, basierend auf Höhen- und Abweichungskoordinaten der Oberleitung (1), die sich gemäß der Fortbewegung des Fahrzeugs (9) ändern.

4. Oberleitungsmessvorrichtung nach Anspruch 1, 2 oder 3, wobei
jedes des ersten und zweiten Oberleitungsmessmittels (2, 3) für die Projektion von monochromatischem Licht im Infrarotbereich, um das reflektierte Licht zu erzeugen, das stärker als die Intensität des Sonnenlichts zur Tageszeit ist, als der Laserstrahl (L1, L2) und für den Empfang des Lichts konfiguriert ist, um das Bild (a1, b1) der Oberleitung (1) auf einer lichtempfangenden Fläche durch eine Linse (2d, 3d) auszubilden.

5. Oberleitungsmessverfahren, das die folgenden Schritte umfasst:
Projizieren von Schlitzlaserstrahlen (L1, L2), etwa in einer vertikalen Richtung auf eine Oberleitung (1) von einer unteren linken Seite und einer unteren rechten Seite der Oberleitung (1), sodass sie auf die Oberleitung (1) gestrahlt werden;
Erhalten von Bildern (a1, b1), die die Konfigurationen der Oberleitung (1) auf der unteren linken Seite bzw. der unteren rechten Seite davon, einschließlich einer seitlichen Fläche davon darstellen, mittels eines ersten und eines zweiten Oberleitungsmessmittels (2, 3), die auf einem Fahrzeugdach (9) bereitgestellt werden, auf Basis eines Bilds (a1, b1), das von einem reflektierten Licht der projizierten Laserstrahlen (L1, L2) erhalten wird;
wobei jedes des ersten und zweiten Oberleitungsmessmittels (2, 3) mit einem lichtprojizierenden Instrument (2a, 3a) konstruiert ist, um den Laserstrahl (L1, L2) auf die Oberleitung (1) etwa in der vertikalen Richtung zu projizieren und mit einem lichtempfangenden Instrument (2c, 3c), um das Bild (a1, b1) mit einem vorher festgelegten Höhenwinkel in Fortbewegungsrichtung des Fahrzeugs (9) zu fotografieren;
wobei das Oberleitungsmessverfahren ferner Folgendes umfasst:
Abtasten eines Laserstrahls in einer Abweichungsrichtung der Oberleitung (1) mittels eines Laser-Längenmess-Sensormittels, das in der Nähe einer Dachmitte des Fahrzeugs (9) bereitgestellt wird;
Detektieren von Höhen- und Abweichungskoordinaten der Oberleitung (1) auf Basis von Signalen vom Laser-Längenmess-Sensormittel;
Berechnen von Abständen des ersten Oberleitungsmessmittels (2) auf der linken Seite und des zweiten Oberleitungsmessmittels (3) auf der rechten Seite der Oberleitung (1), basierend auf einem Detektionsergebnis, und
Verarbeiten der Bilder (a1, b1), die die Konfigurationen der Oberleitung (1) auf der unteren linken Seite und der unteren rechten Seite davon, einschließlich der seitlichen Fläche davon darstellen, die von dem ersten und dem zweiten Oberleitungsmessmittel (2, 3) erhalten werden, wobei die Verarbeitung die Anpassung der Bilder (a1, b1), basierend auf den berechneten Abständen umfasst, sodass die Größen der Bilder (a1, b1) gleich groß werden, wodurch Daten erzeugt werden, die eine Querschnittskonfiguration der Oberleitung (1) an der Gleitfläche und der linken und der rechten Seite davon anzeigen.

6. Oberleitungsmessverfahren nach Anspruch 5, das ferner Folgendes umfasst: Berechnen eines Ausmaßes an Verschleiß der Oberleitung (1), auf Basis von Daten, die eine Querschnittskonfiguration der Oberleitung (1) an der Gleitfläche und der linken und der rechten Seite davon anzeigen und außerdem das Berechnen von Daten, die eine kubische Konfiguration der Oberleitung (1) anzeigen.

7. Oberleitungsmessverfahren nach Anspruch 5 oder 6, der ferner Folgendes umfasst:
Steuern von Rotationen des ersten und des zweiten Oberleitungsmessmittels (2, 3), während diese daran fixiert sind, sodass die Fotosichtfeldbereiche des ersten und des zweiten Oberleitungsmessmittels (2, 3) innerhalb von Flächen rotieren können, wobei sich jedes etwa senkrecht in Fortbewegungsrichtung des Fahrzeugs befindet (9), mittels Anwendung von rotierenden Trägermitteln (5, 6), die an beiden Enden der linken Seite und der rechten Seite des Fahrzeugs (9) bereitgestellt werden; und
Steuern der Rotationen der rotierenden Trägermittel (5, 6), sodass die Oberleitung (1) in die Fotosichtfeldbereiche des ersten und des zweiten Oberleitungsmessgeräts (2, 3) gelangen, basierend auf Höhen- und Abweichungskoordinaten der Oberleitung (1), die sich gemäß der Fortbewegung des Fahrzeugs (9) ändern.

8. Oberleitungsmessverfahren nach Anspruch 5, 6 oder 7, wobei
jedes des ersten und des zweiten Oberleitungsmessmittels (2, 3) monochromatisches Licht im Infrarotbereich projiziert, um das reflektierte Licht zu erzeugen, das stärker als die Intensität des Sonnenlichts zur Tageszeit ist, als der Laserstrahl (L1, L2) und Licht empfängt, um das Bild (a1, b1) der Oberleitung (1) auf einer lichtempfangenden Fläche durch eine Linse (2d, 3d) auszubilden.

## Revendications

1. Appareil de mesure de câble de trolley pour une voiture (9), comprenant :
des premiers et deuxièmes moyens de mesure de câble de trolley (2, 3), tous deux étant configurés pour être prévus sur un toit d'une voiture (9), et pour projeter des faisceaux laser divisés (L1, L2), à peu près dans une direction verticale, sur un câble de trolley (1) à partir d'un côté inférieur gauche et d'un côté inférieur droit de celui-ci, de manière à ce qu'ils soient rayonnés sur ledit câble de trolley (1) ; obtenant de ce fait des images (a1, b1), présentant les configurations dudit câble de trolley (1) du côté inférieur gauche et du côté inférieur droit de celui-ci, y compris une surface latérale de celui-ci, chacune étant obtenue à partir d'une image (a1, b1) de la lumière de réflexion desdits faisceaux laser (L1, L2) projetés, respectivement ;
dans lequel chacun desdits premiers et deuxièmes moyens de mesure de câble de trolley (2, 3) est réalisé avec des moyens de projection de lumière (2a, 3a) pour projeter ledit faisceau laser (L1, L2) sur ledit câble de trolley (1), à peu près dans la direction verticale, et des moyens de réception de lumière (2c, 3c) pour photographier ladite image (a1, b1) avec un angle d'élévation prédéterminé dirigé dans le sens d'avance de ladite voiture (9) ; et
dans lequel l'appareil de mesure de câble de trolley comprend en outre :
des moyens formant capteur de mesure de longueur de laser, qui sont configurés pour être prévus dans le voisinage d'un centre du toit de ladite voiture (9), et pour balayer un faisceau laser dans une direction de déviation dudit câble de trolley (1) ;
des moyens de détection de hauteur et de déviation (4), qui sont configurés pour détecter les coordonnées de hauteur et de déviation dudit câble de trolley (1) sur la base des signaux provenant desdits moyens formant capteur de mesure de longueur de laser ; et
des moyens formant contrôleur (7), qui sont configurés pour calculer les distances des premiers moyens de mesure de câble de trolley (2) du côté gauche et des deuxièmes moyens de mesure de câble de trolley (3) du côté droit jusqu'au câble de trolley (1), sur la base d'un résultat de la détection effectuée par les moyens de détection de hauteur et de déviation de câble de trolley (4),
dans lequel les moyens formant contrôleur (7) sont configurés pour traiter les images (a1, b1) présentant les configurations dudit câble de trolley (1) du côté inférieur gauche et du côté inférieur droit dudit câble de trolley (1), y compris la surface latérale de celui-ci, qui sont obtenues par lesdits premiers et deuxièmes moyens de mesure de câble de trolley (2, 3), dans lequel le traitement comprend l'ajustement des images (a1, b1), sur la base des distances calculées, de sorte que les tailles des images (a1, b1) deviennent égales l'une à l'autre, produisant de ce fait des données indicatives d'une configuration en coupe dudit câble de trolley (1) sur la surface de coulissement et du côté gauche et du côté droit de celui-ci.

2. Appareil de mesure de câble de trolley, selon la revendication 1, comprenant en outre :
des moyens de mesure (8), qui sont configurés pour calculer une quantité d'usure dudit câble de trolley (1) sur la base de données indicatives de la configuration en coupe dudit câble de trolley (1) sur la surface de coulissement et du côté inférieur gauche et du côté inférieur droit de celui-ci, et pour calculer également des données indicatives d'une configuration cubique dudit câble de trolley (1).

3. Appareil de mesure de câble de trolley, selon la revendication 1 ou 2, comprenant en outre :
des moyens formant étage rotatif (5, 6), configurés pour être prévus sur les deux extrémités du côté gauche et du côté droit de ladite voiture (9), pour commander les rotations desdits premiers et deuxièmes moyens de mesure de câble de trolley (2, 3) tout en les maintenant sur ceux-ci, de sorte que les plages de champs de vision de photographie desdits premiers et deuxièmes moyens de mesure de câble de trolley (2, 3) puissent tourner dans les limites des surfaces, chacune étant à peu près perpendiculaire à la direction d'avance de ladite voiture (9) ; et
des moyens formant contrôleur de rotation (7c), qui sont configurés pour commander les rotations desdits moyens formant étage rotatif (5, 6), de sorte que ledit câble de trolley (1) entre dans les plages de champs de vision de photographie par lesdits premiers et deuxièmes moyens de mesure de câble de trolley (2, 3), sur la base des coordonnées de hauteur et de déviation dudit câble de trolley (1), changeant conformément à l'avance de ladite voiture (9).

4. Appareil de mesure de câble de trolley, selon la revendication 1, 2, ou 3, dans lequel
chacun desdits premiers et deuxièmes moyens de mesure de câble de trolley (2, 3) est configuré pour projeter une lumière monochromatique dans la région infrarouge, pour générer la lumière de réflexion, qui est plus intense que la lumière du soleil pendant le jour, en tant que dit faisceau laser (L1, L2), et pour recevoir les lumières de manière à former l'image (a1, b1) dudit câble de trolley (1) sur une surface de réception de lumière par l'intermédiaire d'une lentille (2d, 3d).

5. Procédé de mesure de câble de trolley comprenant les étapes suivantes :
de projection de faisceaux laser divisés (L1, L2), à peu près dans une direction verticale, sur un câble de trolley (1) à partir d'un côté inférieur gauche et d'un côté inférieur droit dudit câble de trolley (1), de manière à ce qu'ils soient rayonnés sur ledit câble de trolley (1) ;
d'obtention d'images (a1, b1), présentant les configurations dudit câble de trolley (1) du côté inférieur gauche et du côté inférieur droit de celui-ci, respectivement, y compris une surface latérale de celui-ci, en utilisant des premiers et deuxièmes moyens de mesure de câble de trolley (2, 3), qui sont prévus sur un toit d'une voiture (9), sur la base d'une image (a1, b1) obtenue à partir d'une lumière de réflexion desdits faisceaux laser (L1, L2) projetés ;
dans lequel chacun desdits premiers et deuxièmes moyens de mesure de câble de trolley (2, 3) est réalisé avec des moyens de projection de lumière (2a, 3a) pour projeter ledit faisceau laser (L1, L2) sur ledit câble de trolley (1), à peu près dans la direction verticale, et des moyens de réception de lumière (2c, 3c) pour photographier ladite image (a1, b1) avec un angle d'élévation prédéterminé dirigé dans le sens d'avance de ladite voiture (9) ;
dans lequel le procédé de mesure de câble de trolley comprend en outre :
le balayage d'un faisceau laser dans une direction de déviation dudit câble de trolley (1), en utilisant des moyens formant capteur de mesure de longueur de laser, qui sont prévus dans le voisinage d'un centre du toit de ladite voiture (9) ;
la détection des coordonnées de hauteur et de déviation dudit câble de trolley (1) sur la base des signaux provenant desdits moyens formant capteur de mesure de longueur de laser ;
le calcul des distances des premiers moyens de mesure de câble de trolley (2) du côté gauche et des deuxièmes moyens de mesure de câble de trolley (3) du côté droit jusqu'au câble de trolley (1), sur la base d'un résultat de la détection, et
le traitement des images (a1, b1) présentant les configurations dudit câble de trolley (1) du côté inférieur gauche et du côté inférieur droit de celui-ci, y compris la surface latérale de celui-ci, qui sont obtenues par lesdits premiers et deuxièmes moyens de mesure de câble de trolley (2, 3), dans lequel le traitement comprend l'ajustement des images (a1, b1), sur la base des distances calculées, de sorte que les tailles des images (a1, b1) deviennent égales l'une à l'autre, et produisant de ce fait des données indicatives d'une configuration en coupe dudit câble de trolley (1) sur une surface de coulissement et du côté gauche et du côté droit de celui-ci.

6. Procédé de mesure de câble de trolley, selon la revendication 5, comprenant en outre :
le calcul d'une quantité d'usure dudit câble de trolley (1) sur la base de données indicatives de la configuration en coupe dudit câble de trolley (1) sur la surface de coulissement de celui-ci et du côté inférieur gauche et du côté inférieur droit de celui-ci, et également le calcul de données indicatives d'une configuration cubique dudit câble de trolley (1).

7. Procédé de mesure de câble de trolley, selon la revendication 5 ou 6, comprenant en outre :
la commande des rotations desdits premiers et deuxièmes moyens de mesure de câble de trolley (2, 3) tout en les maintenant sur ceux-ci, de sorte que les plages de champs de vision de photographie par lesdits premiers et deuxièmes moyens de mesure de câble de trolley (2, 3) puissent tourner dans les limites des surfaces, chacune étant à peu près perpendiculaire à la direction d'avance de ladite voiture (9), avec l'application de moyens formant étage rotatif (5, 6), qui sont prévus sur les deux extrémités du côté gauche et du côté droit de ladite voiture (9) ; et
la commande des rotations desdits moyens formant étage rotatif (5, 6), de sorte que ledit câble de trolley (1) entre dans les limites des plages de champs de vision de la photographie par lesdits premiers et deuxièmes moyens de mesure de câble de trolley (2, 3), sur la base des coordonnées de hauteur et de déviation dudit câble de trolley (1), changeant conformément à l'avance de ladite voiture (9).

8. Procédé de mesure de câble de trolley, selon la revendication 5, 6, ou 7, dans lequel
chacun desdits premiers et deuxièmes moyens de mesure de câble de trolley (2, 3) projette une lumière monochromatique dans la région infrarouge, pour générer la lumière de réflexion, qui est plus intense que la lumière du soleil pendant le jour, en tant que dit faisceau laser (L1, L2), et reçoit les lumières de manière à former l'image (a1, b1) dudit câble de trolley (1) sur une surface de réception de lumière par l'intermédiaire d'une lentille (2d, 3d).
